# EUROPEAN PATENT APPLICATION

(11) **EP 4 786 877 A1**
(43) Date of publication of application: **05.08.2026**
(21) Application number: 25223011.5
(22) Date of filing: 12.12.2025
(51) Int. Cl.: F24S 25/636

(54) **A SOLAR PANEL MOUNTING STRUCTURE AND METHOD FOR MOUNTING**

(30) Priority: 29.01.2025 SE 2550082
(71) Applicant: TJB Försäljning AB, 534 31 Vara (SE)
(72) Inventor: BRAND, Kent, 761 71 Norrtälje (SE)
(74) Representative: Zacco Sweden AB

(57) **Abstract**

A mounting structure (1) for mounting a first solar panel (11) on a support surface (4). The mounting structure (1) comprising an elongated base structure (23) extending in a longitudinal direction (Lo_D) and configured for being fastened to the support surface (4); a first clamping element (5) attached to the elongated base structure (23); a first link arm structure (26) pivotally connected to the elongated base structure (23); a second clamping element (6) attached to the first link arm structure (26) for enabling motion of the second clamping element (6) relative to the first clamping element (5); and an elongated first actuator arrangement (49) comprising a first elongated tension bar (24) operably connected to a first tensioning mechanism (50) for selectively varying the tension of the first elongated tension bar (24). The first actuator arrangement (49) is upon operation of the first tensioning mechanism (50) configured for pulling the second clamping element (6) towards the first clamping element (5) for enabling clamping of the first solar panel between the first and second clamping elements (5,6).

## Description

### TECHNICAL FIELD

The present disclosure relates to a mounting structure for mounting a first solar panel on a support surface, and a method for mounting a first solar panel on a support surface by means of a mounting structure. The mounting structure is specifically adapted for enabling quick and reliable mounting of solar panels on a substantially flat surface, such as commercial or residential flat-roof or the like.

### BACKGROUND

In the field of mounting structure for mounting a first solar panel on a support surface, there is a continuous demand for improvements in terms of quick and cost-efficient installation without sacrificing long-term installation reliability of the solar panel or robustness of the mounting structure.

Document WO21239856A1 shows a solution that includes a separate solar module holding down clamp, through which a fastening screw extends, in order to fasten solar modules to a solar module retainer.

There are many disadvantages with this type of solutions, such as complicated and time-consuming assembly of the holding down clamp and the fastening screw, as well as many separate parts that can be lost or dropped on the solar panels during installation of the solar panels on the mounting assembly.

There is thus a need for an improved mounting structure.

### SUMMARY

An object of the present disclosure is to provide a mounting structure and associated method for mounting a solar panel, where the previously mentioned problems are avoided. This object is at least partly achieved by the features of the independent claims.

According to a first aspect of the present disclosure, there is provided a mounting structure for mounting a first solar panel on a support surface. The mounting structure comprising an elongated base structure extending in a longitudinal direction and configured for being fastened to the support surface; a first clamping element attached to the elongated base structure; a first link arm structure pivotally connected to the elongated base structure; a second clamping element attached to the first link arm structure for enabling motion of the second clamping element relative to the first clamping element; and an elongated first actuator arrangement comprising a first elongated tension bar operably connected to a first tensioning mechanism for selectively varying the tension of the first elongated tension bar. The first actuator arrangement is upon operation of the first tensioning mechanism configured for pulling the second clamping element towards the first clamping element for enabling clamping of the first solar panel between the first and second clamping elements.

According to a second aspect of the present disclosure, there is provided a method for mounting a first solar panel on a support surface by means of a mounting structure. wherein the mounting structure comprises an elongated base structure extending in a longitudinal direction, a first clamping element attached to the elongated base structure, a first link arm structure pivotally connected to the elongated base structure, a second clamping element attached to the first link arm structure for enabling motion of the second clamping element relative to the first clamping element, and an elongated first actuator arrangement comprising a first elongated tension bar operably connected to a first tensioning mechanism for selectively varying the tension of the first elongated tension bar. The method comprising: positioning the first solar panel between the first and second clamping elements; and operating the first tensioning mechanism for tensioning the elongated first tension bar for pulling the second clamping element towards the first clamping element, thereby clamping the first solar panel between the first and second clamping elements.

In this way, significant improvements in terms installation speed and handling during installation work of the solar panel using the mounting structure. Specifically, the clamping motion of the second clamping element by means of the elongated first actuator arrangement enables a completely new way of securing the solar panel to the mounting structure, namely by simply moving at least one the pre-mounted clamping elements from a non-clamping position to a clamping position. Thereby, no separate clamping elements or associated fastening screw needs to be manually transported, assembled and tightened by the installation worker. Instead, the solar panel is simply laid down on the mounting structure and the first tensioning mechanism is operated, for example by means of an electric screw driver or the like, for shifting at least one of the pre-mounted clamping elements from the non-clamping position to the clamping position.

Moreover, the pivotal connection of the first link arm structure to the elongated base structure enables transportation of the mounting structure in a flat folded down position of the first link arm structure, while still enabling an inclined assembly position of the solar panel in the folded up position of the first link arm structure.

In addition, by having the first actuator arrangement configured for pulling the second clamping element towards the first clamping element, during operation of the first tensioning mechanism, for enabling clamping of the first solar panel between the first and second clamping element, there is no need for a locking mechanism that locks the first link arm structure in the folded up position. On the contrary, the first link arm structure is configured for being moveable in the clamping direction of the first link arm structure, thereby further saving cost and weight and enabling a more simple installation.

Clamping of the solar panel between the first and second clamping elements by pulling the second clamping element towards the first clamping element also enables advantages in terms of assembly quality, because there is less potential installation errors. Mounting of a solar panel using a separate solar module holding down clamp combined with a fastening screw can easily results in incorrect assembly or damages caused by over-tightened or under-tightened fastening screw, or incorrect positioning of the holding down clamp, while operation of the pre-installed first tensioning mechanism is easy and requires less manual work.

Finally, operation of the pre-installed first tensioning mechanism is also generally much more simply for an installation worker compared with mounting of the solar panel using separate solar module holding down clamps, because it is generally difficult for an installation worker to reach the location where these holding down clamps should be installed due to the large size of the solar panels.

Further advantages are achieved by implementing one or several of the features of the dependent claims.

In some example embodiments, that may be combined with any one or more of the above-described embodiments, a first end portion of the elongated first actuator arrangement is connected to the first clamping element or to the elongated base structure, in particular to the elongated base structure at a position along the elongated base structure located close to the first clamping element. This design enables satisfactory clamping force between the first and second clamping elements.

In some example embodiments, that may be combined with any one or more of the above-described embodiments, a second end portion of the elongated first actuator arrangement is connected to the second clamping element or the first link arm structure. This design enables satisfactory clamping force between the first and second clamping elements.

In some example embodiments, that may be combined with any one or more of the above-described embodiments, the first clamping element comprises a clamping surface configured to abut a first peripheral side surface of the solar panel, a first support surface arranged substantially perpendicular to the clamping surface and configured to abut a backside surface of the solar panel. This design enables simplified mounting process, because the solar panel may temporarily rest on the first support surface without requiring active holding by an installation worker until clamping of the solar panel is completed.

In some example embodiments, that may be combined with any one or more of the above-described embodiments, the second clamping element comprises a clamping surface configured to abut a first peripheral side surface of the solar panel, a first support surface arranged perpendicular to the clamping surface and configured to abut a backside surface of the solar panel. This design enables simplified mounting process, because the solar panel may temporarily rest on the first support surface without active holding by an installation worker, until the first tensioning mechanism is operated.

In some example embodiments, that may be combined with any one or more of the above-described embodiments, one or both of the first and second clamping elements has a generally U-shaped or J-shaped cross-sectional shape configured to hold a side edge of the solar panel.

In some example embodiments, that may be combined with any one or more of the above-described embodiments, the first end portion of the elongated first actuator arrangement at least partly extends through an alignment guide arrangement of the first clamping element for controlling the angular position of the first clamping element around a pivot joint of the first clamping element, in particular for ensuring that the first support surface is always parallel with a straight line extending through a centre of each of the first and second clamping elements; and/or the second end portion of the elongated first actuator arrangement at least partly extends through an alignment guide arrangement of the second clamping element for controlling the angular position of the second clamping element around a pivot joint of the second clamping element, in particular for ensuring that the first support surface is always parallel with a straight line extending through a centre of each of the first and second clamping elements. Thereby, damages or improper installation caused by incorrect position of the clamping elements can be avoided.

In some example embodiments, that may be combined with any one or more of the above-described embodiments, the first clamping element is configured to engage a first peripheral side surface of the first solar panel and the second clamping element is configured to engage a second peripheral side surface of the first solar panel located opposite to said first peripheral side surface. Thereby, a contracting clamping force between the first and second clamping elements may be applied to the first solar panel.

In some example embodiments, that may be combined with any one or more of the above-described embodiments, the first clamping element is pivotally attached to the elongated base structure, and/or the second clamping element is pivotally attached to the first link arm structure. The pivotal attachment enables mounting of solar panels having different sizes, while still being able to adapt the orientation of the first and second clamping elements to the orientation of the solar panel, thereby providing a more safe and reliable mounting.

In some example embodiments, that may be combined with any one or more of the above-described embodiments, the first clamping element is pivotally attached to the elongated base structure via a pivot joint having a pivot axis extending in lateral direction perpendicular to longitudinal direction of the elongated base structure, and/or the second clamping element is pivotally attached to the first link arm structure via a pivot joint having a pivot axis extending in lateral direction perpendicular to longitudinal direction of the elongated base structure. Thereby, safe and reliable mounting of solar panels having different sizes is enabled.

In some example embodiments, that may be combined with any one or more of the above-described embodiments, the first link arm structure is pivotally connected to the elongated base structure via a pivot joint having a pivot axis extending in lateral direction perpendicular to longitudinal direction of the elongated base structure. Thereby, the mounting structure may be very compact in the folded state of the first link arm structure.

In some example embodiments, that may be combined with any one or more of the above-described embodiments, the first elongated tension bar is made of metal material, specifically steel, and the first elongated tension bar corresponds to a tension rod or a tension wire or a tension cable. This design provides a robust and reliable installation over time.

In some example embodiments, that may be combined with any one or more of the above-described embodiments, the first tensioning mechanism comprises a threaded member engaged with a threaded section of the first elongated tension bar or with a threaded intermediate member associated with the first elongated tension bar. A threaded member is a cost-effective, compact, light-weight, reliable and easily operable design for implementing the first tensioning mechanism.

In some example embodiments, that may be combined with any one or more of the above-described embodiments, the threaded member has an interface for enabling torque-transfer connection with a manual tool or a driver bit of an electric screwdriver for enabling operation of the first tensioning mechanism. The has the advantage of enabling quick and cost-efficient operation of the first tensioning mechanism.

In some example embodiments, that may be combined with any one or more of the above-described embodiments, the threaded member corresponds to a wing nut for enabling manual operation of the first tensioning mechanism. This design has the advantage of being operable by an installation worker also without tools.

In some example embodiments, that may be combined with any one or more of the above-described embodiments, the first tensioning mechanism comprises an eccentric clamp module with handle for manual operation of the eccentric clamp module. This design has the advantage of being operable by an installation worker also without tools.

In some example embodiments, that may be combined with any one or more of the above-described embodiments, the first tensioning mechanism comprises a toggle clamp module with handle for manual operation of the toggle clamp module. This design has the advantage of being operable by an installation worker also without tools.

In some example embodiments, that may be combined with any one or more of the above-described embodiments, the first tensioning mechanism comprises a friction based clamping device configured for releasably engaging the first elongated tension bar, or an associated member thereto, after a certain clamping force between the first and second clamping elements has been obtained. This design has the advantage of providing a cost-effective, compact and light-weight design for implementing the first tensioning mechanism.

In some example embodiments, that may be combined with any one or more of the above-described embodiments, operation of the first tensioning mechanism involves: rotation of the threaded member; or actuating the handle of the eccentric clamp module for manual operation of the eccentric clamp module; or actuating the handle of the toggle clamp module for manual operation of the toggle clamp module; or releasably engaging the friction based clamping device on the first elongated tension bar, or a member associated thereto, after a certain clamping force between the first and second clamping elements has been obtained.

In some example embodiments, that may be combined with any one or more of the above-described embodiments, the first link arm structure can be pivotally folded between a raised position and a folded down position, wherein the folded down position of the first link arm structure results in a flat configuration of the mounting structure and corresponds to a transport state of the mounting structure, and wherein the raised position of the first link arm structure results in a deployed configuration of the mounting structure and corresponds to an assembled state of the mounting structure. This design enables compact transport format in the folded down state, and high solar energy production in deployed state.

In some example embodiments, that may be combined with any one or more of the above-described embodiments, an axis of elongation of the first link arm structure and/or the first elongated tension bar are substantially parallel with the longitudinal direction of the elongated base structure when the first link arm structure is located in the folded down position. This design enables compact transport format in the folded down state.

In some example embodiments, that may be combined with any one or more of the above-described embodiments, an axis of elongation of the first link arm structure, an axis of elongation of the first elongated tension bar, and the longitudinal direction of the elongated base structure jointly form a triangle when the first link arm structure is located in the raised position. This design enables reliable clamping motion of the solar panel between the first and second clamping elements.

In some example embodiments, that may be combined with any one or more of the above-described embodiments, the first actuator arrangement, in particular the first elongated tension bar, is configured to slide relative to the second clamping element or the first link arm structure upon folding of the first link arm structure between a raised position and a folded down position. Thereby, the first link arm structure can be shifted from the folded to the raised state, and oppositely, without additional assembly work of the first actuator arrangement to the first link arm. Instead, the first link arm structure can be simply raised to deployed state and the mounting structure is immediately ready for receiving a solar panel, without additional preparation work.

In some example embodiments, that may be combined with any one or more of the above-described embodiments, the first elongated tension bar has a circular cross-section. This provide a cost-efficient solution and is directly compatible with a threaded section.

In some example embodiments, that may be combined with any one or more of the above-described embodiments, the first end portion of the first elongated tension bar at least partly extends through a hole in the first clamping element, in particular in a side wall of the first support surface of the first clamping element; and/or the second end portion of the first elongated tension bar extends through a hole in the second clamping element, in particular in a side wall of the first support surface of the second clamping element. Thereby, damages or improper installation caused by incorrect position of the clamping elements can be avoided, because having the first elongated tension bar at least partly extending through a hole in the first and/or second clamping element results in automatic positioning of the first and/or second clamping element.

In some example embodiments, that may be combined with any one or more of the above-described embodiments, the second end portion of the first elongated tension bar has a folded edge and a return portion of the first elongated tension bar extending backwards from the folded edge, wherein the return portion is configured to interfere with the second clamping element or the first link arm structure for preventing the first elongated tension bar from rotating when operating the first tensioning mechanism. This simplifies operation of the first threaded member acting as the tensioning mechanism, because clamping torque may be applied to the first threaded member without risk for rotation of the first elongated tension bar.

In some example embodiments, that may be combined with any one or more of the above-described embodiments, the return portion is long enough to remain in interfering state with the second clamping element or the first link arm structure in the folded state of the first link arm structure. This has the advantage that the folding of the first link arm structure from the folded state to the raised state does not require any additional manual work for setting the first elongated tension bar in rotationally locked state. Instead, the first elongated tension bar is simply automatically rotationally locked immediately upon shifting the first link arm structure from the folded state to the raised state.

In some example embodiments, that may be combined with any one or more of the above-described embodiments, at least one of the first and second clamping element comprises a needle pin configured to abut against a metal surface of the solar panel for providing an electrical ground connection between the mounting structure and the solar panel. Thereby, automatic earth connection of the solar panel may be provide upon mounting of the solar panel.

In some example embodiments, that may be combined with any one or more of the above-described embodiments, the elongated base structure comprises an elongated metal rail structure connected to a plurality of foot segments that are configured to be fastened to the support surface. Thereby, the risk for damages on the underlying support surface, such as for example a roof, caused by thermal elongation or contraction of the metal rail, can be avoided.

In some example embodiments, that may be combined with any one or more of the above-described embodiments, the connection between the elongated metal rail structure and the plurality of foot segments is configured to enable a relative motion between the elongated metal rail structure and the plurality of foot segments in the longitudinal direction. Thereby, the risk for damages on the underlying support surface, such as for example a roof, caused by thermal elongation or contraction of the metal rail, can be avoided.

In some example embodiments, that may be combined with any one or more of the above-described embodiments, the mounting structure is configured to additionally clamp a neighbouring solar panel, that is arranged side-by-side and facing the same direction as the first solar panel, between the first and second clamping element. Mounting of two neighbouring solar panels using a shared mounting structure provides a cost-efficient design.

In some example embodiments, that may be combined with any one or more of the above-described embodiments, at least one, specifically both, of the first and second clamping elements further comprises a distance member configured for keeping the first solar panel and the neighbouring solar panel spaced apart from each other. Thereby, proper installation distance between neighbouring solar panels is automatically accomplished without need for manual measurement, a separate distance member, or the like.

In some example embodiments, that may be combined with any one or more of the above-described embodiments, the distance member of the first and/or second clamping elements has a hole, and the elongated first actuator arrangement, specifically the first elongated tension bar, extends through said hole. Thereby, the distance member may be secured to the first and/or second clamping element without need for welding or other types of fastening means.

In some example embodiments, that may be combined with any one or more of the above-described embodiments, the mounting structure is configured for additionally mounting a second solar panel on the support surface, wherein the mounting structure is configured to hold the second solar panel such that a facing direction of the second solar panel is different compared with a facing direction of the first solar panel, wherein the elongated base structure further comprises: a third clamping element attached to the elongated base structure; a second link arm structure pivotally connected to the elongated base structure; a fourth clamping element attached to the second link arm structure for enabling motion of the fourth clamping element relative to the third clamping element, an elongated second actuator arrangement comprising a second elongated tension bar operably connected to a second tensioning mechanism for selectively varying the tension of the second elongated tension bar, wherein the second actuator arrangement upon operation of the second tensioning mechanism is configured for pulling the fourth clamping element towards the third clamping element for enabling clamping of a second solar panel between the third and fourth clamping elements. Thereby, two solar panels facing different directions may be mounted using a shared mounting structure.

In some example embodiments, that may be combined with any one or more of the above-described embodiments, the first and second link arm structures are folded down in opposite direction. Thereby, a compact mounting structure in deployed state is provided.

In some example embodiments, that may be combined with any one or more of the above-described embodiments, the first and third clamping elements are fastened to the elongated base structure in first and second end regions of the elongated base structure, respectively, and the first and second link arm structures are pivotally connected to a centre region of the elongated base structure, as seen in the longitudinal direction of the mounting structure. Thereby, a compact mounting structure for two solar panels is provided.

In some example embodiments, that may be combined with any one or more of the above-described embodiments, the elongated base structure comprises a hook structure at a first end region of the elongated base structure, wherein the hook structure is configured to engage with a pivot joint at a second end region of neighbouring elongated base structure located aligned with the elongated base structure, for connecting two individual elongated base structures. The hook structure provides a cost-efficient solution for mutually connecting two or more mounting structures to a single interconnected assembly.

The disclosure also relates to an assembly comprising a mounting structure as described above combined with a first solar panel, wherein the first solar panel is installed on the support surface via the mounting structure.

In some example embodiments, that may be combined with any one or more of the above-described embodiments, the assembly may further comprise a second mounting structure, wherein the mounting structure clamps a first side region of the first solar panel and the second mounting structure clamps a second side region of the first solar panel.

In some example embodiments, that may be combined with any one or more of the above-described embodiments, the assembly may further comprise a second solar panel, wherein the mounting structure additionally clamps a first side region of the second solar panel and the second mounting structure additionally clamps a second side region of the second solar panel.

In some example embodiments, that may be combined with any one or more of the above-described embodiments, the assembly may further comprise a third mounting structure, a third solar panel and a fourth solar panel, wherein the second mounting structure additionally clamps a first side region of the third solar panel and a first side region of the fourth solar panel, and wherein the third mounting structure clamps a second side region of the third solar panel and second side region of the fourth solar panel.

In some example embodiments, that may be combined with any one or more of the above-described embodiments, the method may further comprise a step of unfolding the first link arm structure from the folded position to the raised position. This step is part of installation work performed for making the mounting structure ready for receiving a solar panel.

In some example embodiments, that may be combined with any one or more of the above-described embodiments, the second clamping element moves towards the first clamping element upon clamping of the solar panel while the first clamping element remains stationary. This design enables a cost-efficient solution with few parts, while still enabling the desired simple and quick mounting of the solar panel.

In some example embodiments, that may be combined with any one or more of the above-described embodiments, the first solar panel comprises a frontside surface, a backside surface, a first peripheral side surface and an oppositely located second peripheral side surface, wherein the first clamping element comprises a clamping surface configured to abut the first peripheral side surface of the solar panel, and a first support surface arranged perpendicular to the clamping surface and configured to abut the backside surface of the solar panel, wherein the second clamping element comprises a clamping surface configured to abut the second peripheral side surface of the solar panel, and a first support surface arranged perpendicular to the clamping surface and configured to abut the backside surface of the solar panel, wherein the positioning of the solar panel between the first and second clamping elements involves placing the solar panel between the first and second clamping elements such that the backside of the solar panel rests on the first support surface of the first and second clamping elements. This provides a cost-efficient and simple mounting process of the solar panel.

In some example embodiments, that may be combined with any one or more of the above-described embodiments, the clamping of solar panel between the first and second clamping element involves moving the second clamping element towards the first clamping element such that the clamping surface of the first clamping element abuts the first peripheral side surface of the solar panel and the clamping surface of the second clamping element abuts the second peripheral side surface of the solar panel. This provides a cost-efficient and simple mounting process of the solar panel.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The mounting structure according to the disclosure will be described in detail in the following, with reference to the attached drawings, in which
- Fig. 1: shows schematically an overview of two mounting structures holding two solar panels,
- Fig. 2: shows schematically an overview of three mounting structures holding four solar panels,
- Fig. 3: shows schematically an assembly similar to figure 1 with offset mounting structures,
- Fig. 4: shows schematically a perspective view of the mounting structure in a flat configuration,
- Fig. 5: shows schematically a cross-sectional side-view of the mounting structure of figure 4,
- Fig. 6: shows schematically a perspective view of the mounting structure in a deployed configuration,
- Fig. 7: shows schematically cross-sectional side-view of the mounting structure of figure 6,
- Fig. 8: shows schematically a close-up perspective view of the first and second link arm structures in a deployed configuration,
- Fig. 9: shows schematically a close-up perspective view of the first clamping element,
- Fig. 10: shows schematically a side view of an elongated tension bar,
- Fig. 11A: shows schematically a side view of the threaded member,
- Fig. 11B: shows schematically a side view of the first to fourth clamping elements,
- Fig. 12: shows a perspective view of a distance member,
- Fig. 13: shows end view of the elongated base structure,
- Fig. 14A-B: show a top view and a side view of the metal rail structure,
- Fig. 15A-C: show the basic steps of mounting a solar panel using the mounting structure, and
- Fig. 16A-C: show the basic steps of mutually connecting two mounting structures.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

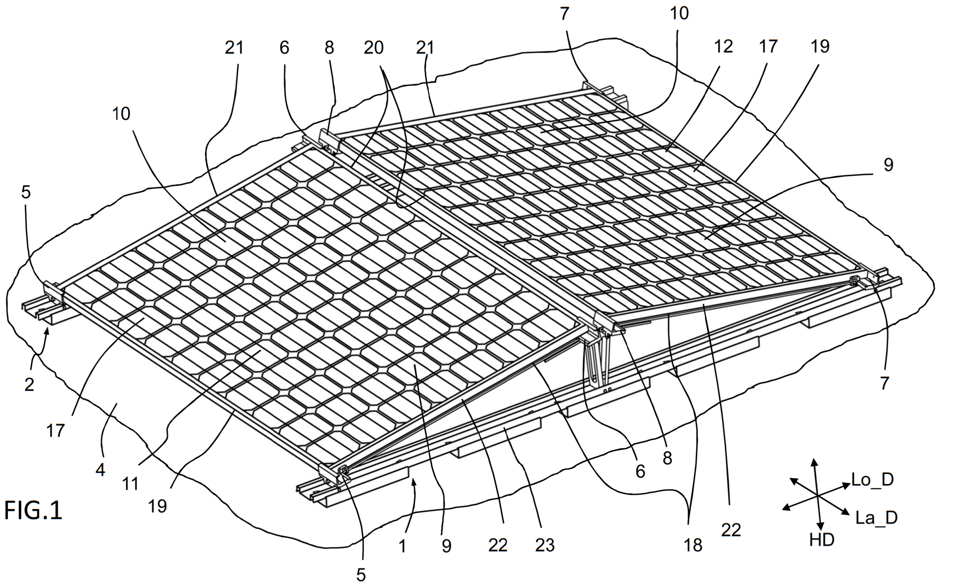

Figure 1 schematically shows an assembly comprising two individual parallel laterally spaced-apart mounting structures 1, 2 that jointly clamps a first solar panel 11 facing a first direction and a second solar panel 12 facing a second direction, wherein the first and second solar panels 11, 12 are installed on an underlying support surface 4 via the first and second mounting structures 1, 2.

A solar panel is also often referred to as a photovoltaic panel, i.e. a panel configured to generate electrical energy from incoming sun light. A solar panel includes a plurality of solar cells and may be manufactured with or without a frame.

In this example embodiment the first and second mounting structures 1, 2 have the same design. The first mounting structure 1 has four clamping elements 5-8: a first clamping element 5, a second clamping element 6, a third clamping element 7, and a fourth clamping element 8, and these four clamping elements 5-8 are configured for individually clamping two individual solar panels 11, 12.

The first mounting structure 1 clamps a first side region 9 of the first solar panel 11 by means of first and second clamping elements 5,6, and a first side region 9 of the second solar panel 12 by means of third and fourth clamping elements 7,8.

Similarly, the second mounting structure 2 clamps a second side region 10 of the first solar panel 11 by means of first and second clamping elements 5,6, and a second side region 10 of the second solar panel 12 by means of third and fourth clamping elements 7,8.

The mounting structure 1, 2 is specifically adapted for enabling quick and reliable mounting of solar panels 11, 12 on a substantially flat support surface 4, such as commercial or residential flat-roof or the like, or directly on the ground. The mounting structure 1, 2 may for example be installed in a flat substantially horizontal surface, but the mounting structure 1, 2 according to the disclosure is not limited to flat horizontal support surface 4, but can in fact be used for mounting a solar panel 11, 12 on a flat or non-flat inclined support surface, such as an inclined saddle roof of a building or the like.

In this example embodiment, the mounting structures 1, 2 are configured for mounting or installing rectangular flat solar panels 11, 12 to the support surface 4.

Moreover, in this example embodiment, each solar panel 11, 12 comprises a frontside surface 17, a backside surface 18, a first peripheral side surface 19 and an oppositely located second peripheral side surface 20, a third peripheral side surface 21 and an oppositely located fourth peripheral side surface 22.

The term "frontside surface" of a solar panel 11,12 refers herein to the surface of the solar cell facing incident radiation. The term "backside surface" of the solar panel refers herein to the surface of the solar panel 11, 12 facing away from incident radiation.

The term "peripheral side surfaces" of the solar panel 11, 12 refer herein to the outer side surfaces of a solar panel 11, 12. The peripheral side surfaces extend from an edge of the frontside surface 17 to a respective edge of the backside surface 18 of a solar panel. Specifically, the circumferential edge of each solar panel 11, 12 comprises a first peripheral side surface 19, a second peripheral side surface 20, a third peripheral side surface 21, and a fourth peripheral side surface 22.

The first and second peripheral side surfaces 19, 20 are located on mutually opposite sides of the solar panel 11, 12, and the third and fourth peripheral side surfaces 21, 22 are located on mutually opposite sides of the solar panel 11, 12.

The solar panel shown in figures has four peripheral side surfaces 19-22, but solar panels may have other shapes which can have another number of peripheral side surfaces such as, for example, three, five or six peripheral side surfaces.

In the assembled state of the first and second mounting structures 1, 2 and first and second solar panels 11, 12 illustrated in figure 1, each mounting structure 1, 2 has an elongated base structure 23 that extends in a longitudinal direction Lo_D. Moreover, the first and second mounting structures 1, 2 are parallel to each other but displaced in a lateral direction La_D relative to each other, wherein the lateral direction La-D is perpendicular to said longitudinal direction Lo_D.

In the assembled state of the first and second mounting structures 1, 2, the second clamping element 6 protrudes further away from the elongated base structure 23 in a height direction HD compared with the first clamping element 5. In other words, the distance in the height direction HD between the second clamping element 6 and the elongated base structure 23 is larger than the distance in the height direction HD between the first clamping element 5 and the elongated base structure 23. The height direction is perpendicular to both said longitudinal direction Lo_D and the lateral direction La-D. In fact, in the example embodiments of the figure 1, the first clamping element 5 is directly connected to the elongated base structure 23.

As a result, the first and second solar panels 11, 12 are mounted in inclined positions, having for example an inclination angle of about 10-40 degrees relative to the longitudinal direction Lo_D, and partly facing opposite directions. This arrangement enables installation of the first and second solar panels 11, 12 in an East-West structures, which is attractive because the solar panels may then generate more electricity during the morning and evening hours when electrical power consumption of a country often is high.

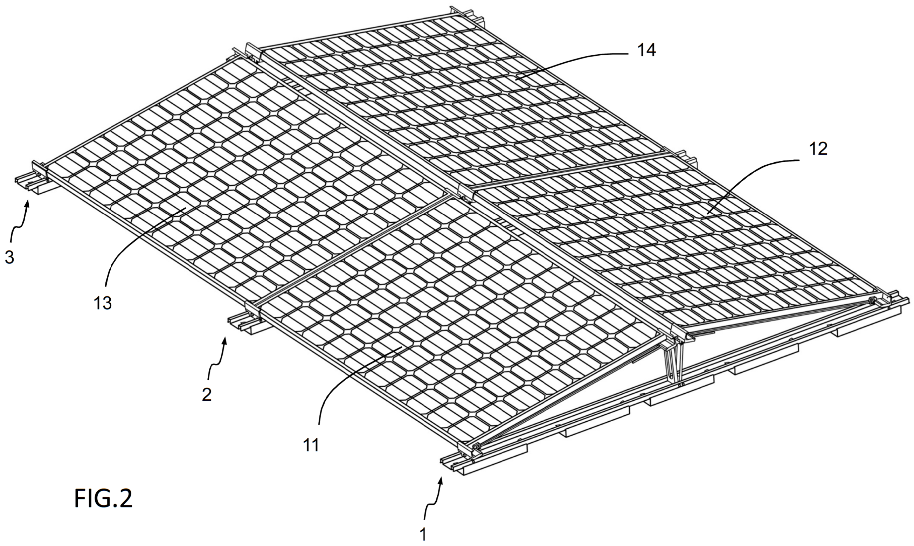

In some example embodiments, as schematically illustrated in figure 2, each of the first to fourth clamping elements 5-8 are wide enough in the lateral direction La_D to support two neighbouring solar panels located side by side.

In other words, the second mounting structure 2 is configured to additionally clamp a neighbouring solar panel 13, that is arranged side-by-side and facing the same direction as the first solar panel 11, between the first and second clamping elements 5,6.

In figure 2, the first, second and third mountings structures 1, 2, 3 have the same design, and the first and second mounting structures 1, 2 jointly holds first and second solar panels 11, 12, and the second and third mounting structures 2, 3 jointly holds the third and fourth solar panels 13, 14. Consequently, the second mounting structure 2 partly holds four solar panels, i.e. the first to fourth solar panels 11-14. This arrangement typically requires that the mounting structures 1,2,3 clamps the solar panels 11-14 at the third and fourth peripheral side surface 21, 22 of the solar panels 11-14, i.e. at the lateral side edges of the solar panels 11-14.

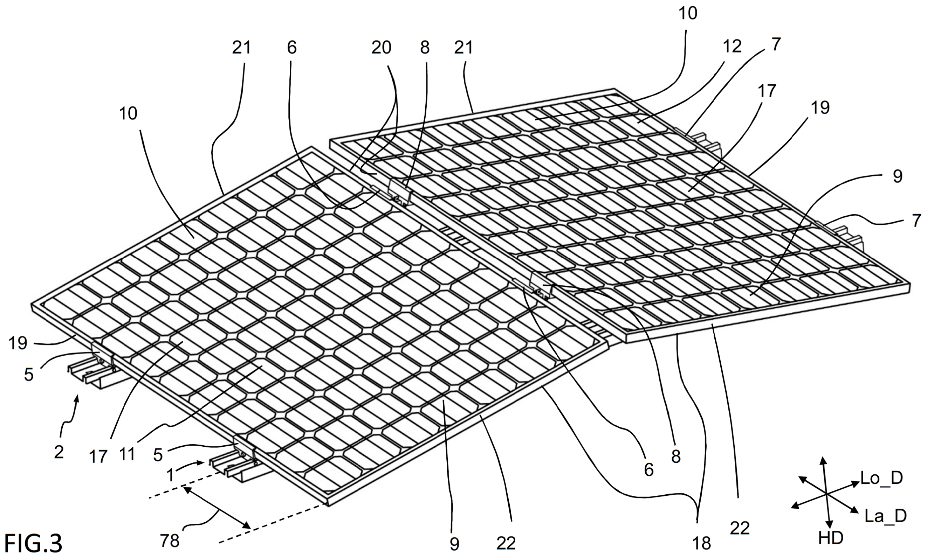

However, in some example embodiments, as illustrated in figure 3, the first and second mounting structures 1, 2 are configured for mounting first and second solar panels 11, 12 to a support surface while holding the first and second solar panels 11, 12 offset from the third and fourth peripheral side surfaces 21, 22, respectively. In other words, it is not necessary that the first and second mounting structures 1, 2 holds the first and second solar panels 11, 12 at the third and fourth peripheral side surface 21, 22 of the first and second solar panels 11, 12. In the example embodiment of figure 3, the first and second mounting structures 1, 2 holds the first and second solar panels 11, 12 at an offset distance 78, such as for example at least 10 cm, from the third and fourth peripheral side surfaces 21, 22, respectively.

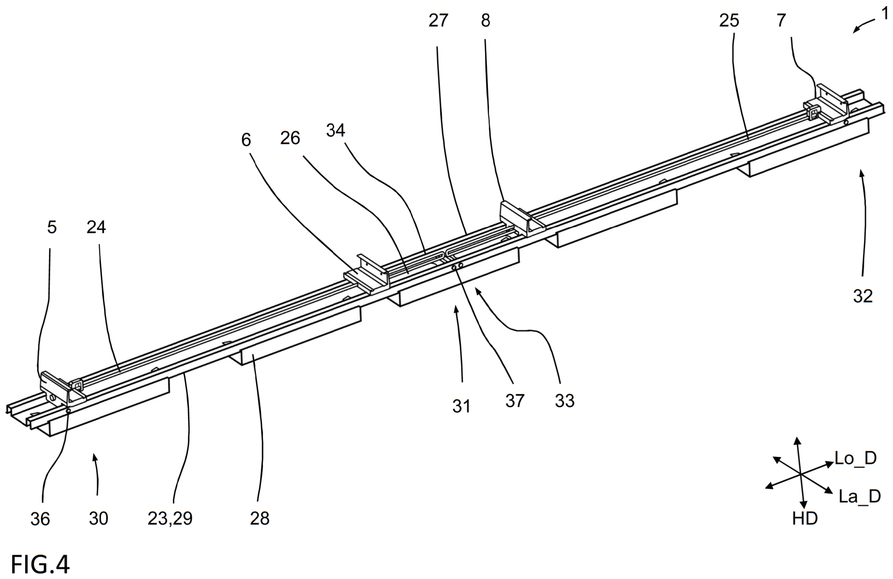

Figures 4 to 14B schematically show various views of an example embodiment of the first mounting structure 1, herein also referred to simply as the mounting structure 1.

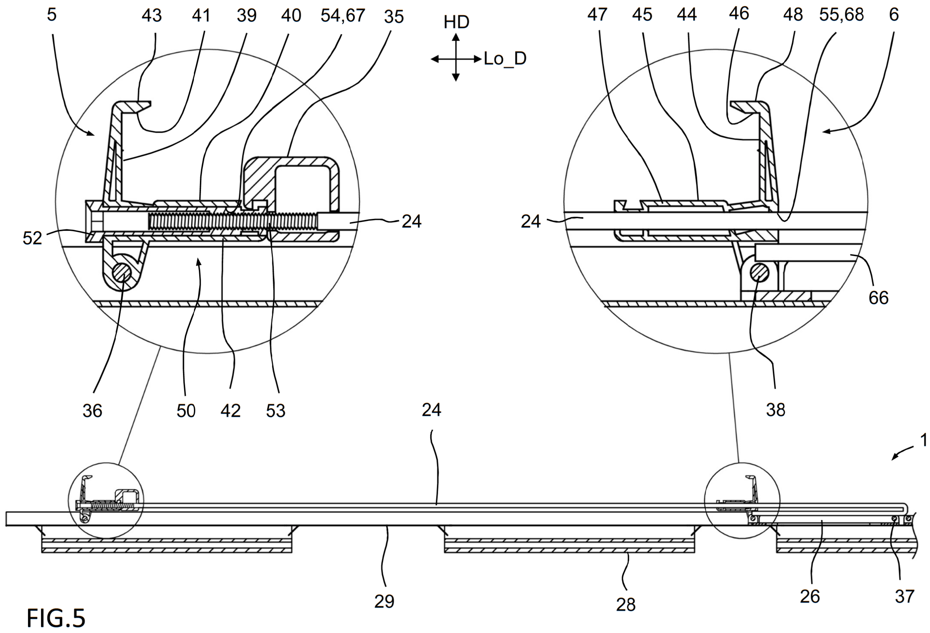

Specifically, figure 4 shows a perspective view of the mounting structure 1 in a flat configuration, and figure 5 shows a cross-sectional side-view of a side portion of the mounting structure 1 of figure 4 in a plane that extends through a centre of a first elongated tension bar 24.

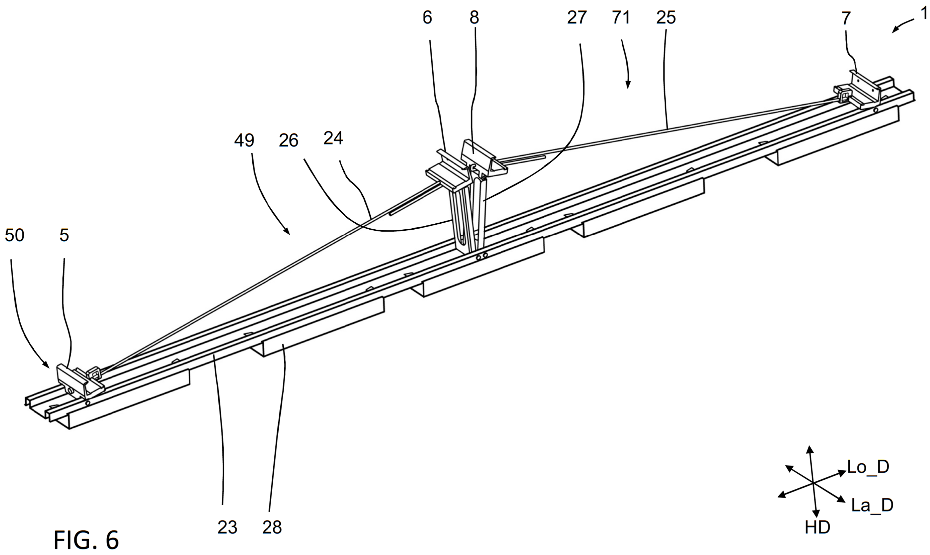

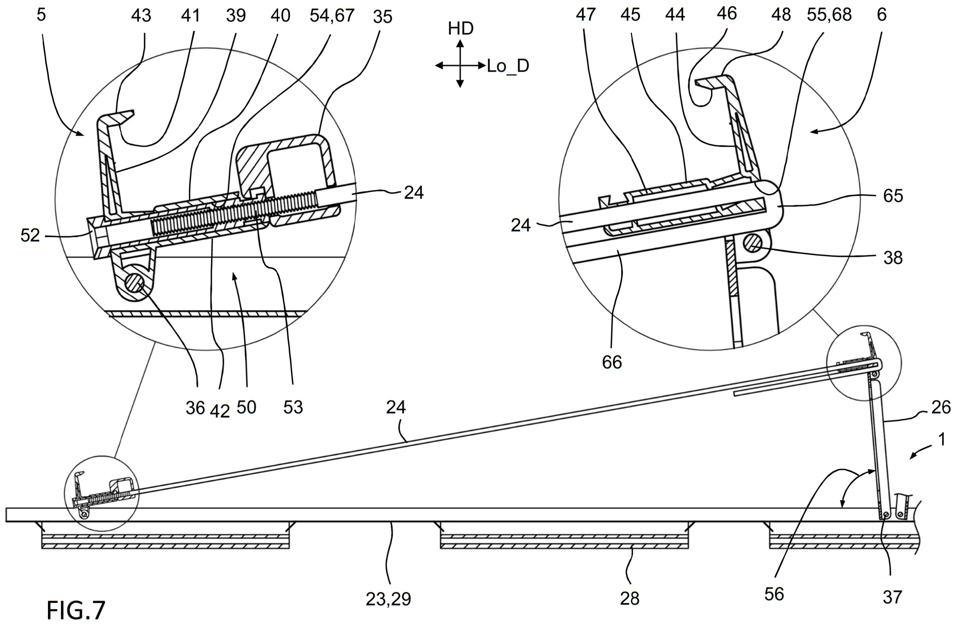

Figure 6 shows a perspective view of the mounting structure 1 in a deployed configuration, i.e. having the first and second link arm structures 26, 27, and figure 7 shows a cross-sectional side-view of a side portion of the mounting structure 1 of figure 6 in a plane that extends through a centre of a first elongated tension bar 24.

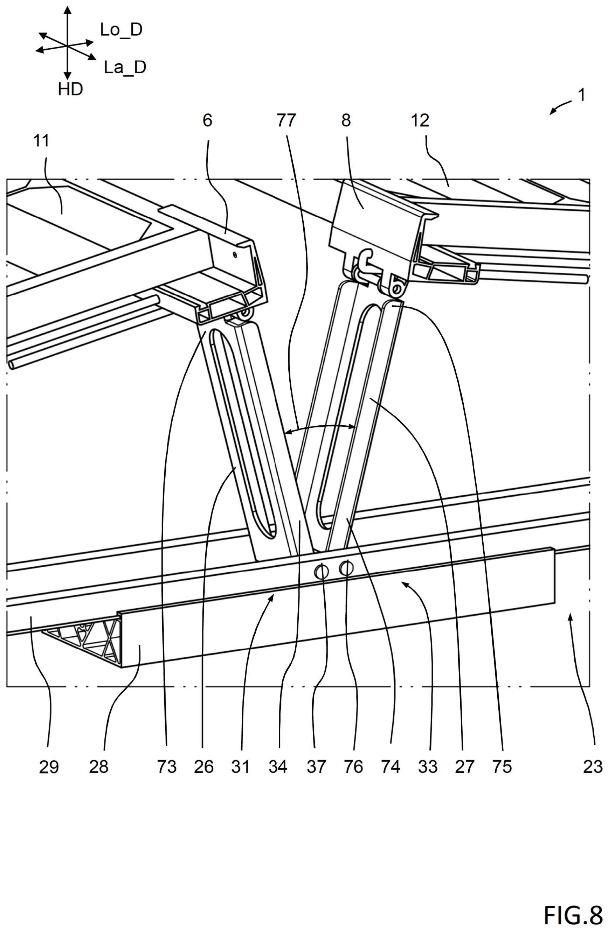

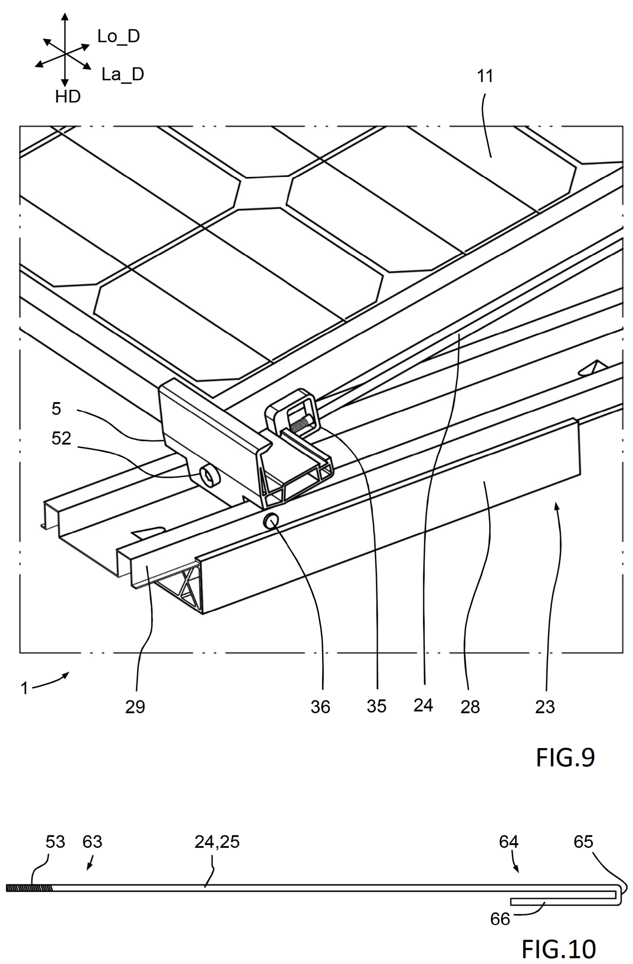

Figure 8 shows a close-up perspective view of the first and second link arm structures 26, 27 of the mounting structure 1 in a deployed configuration, and figure 9 shows a close-up perspective view of the first clamping element 5 in a deployed configuration.

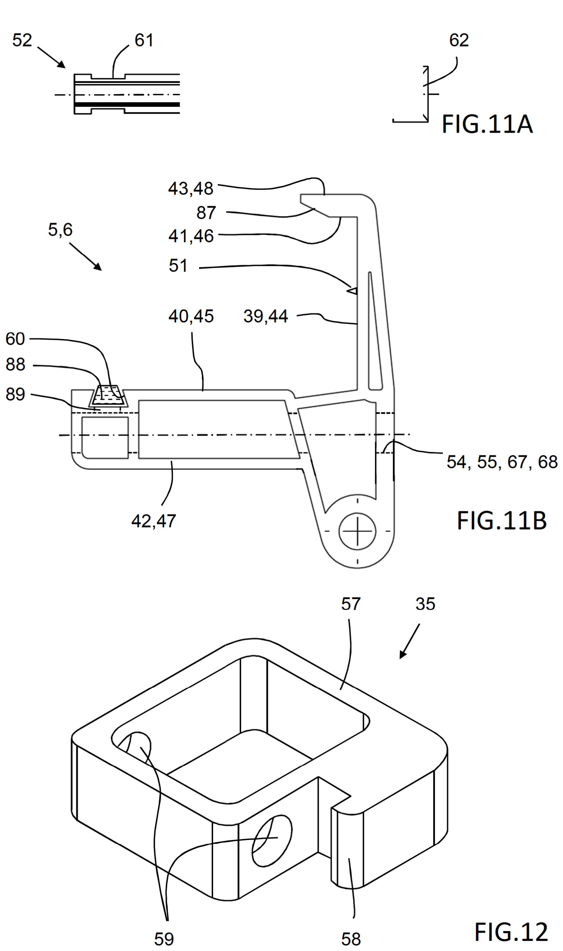

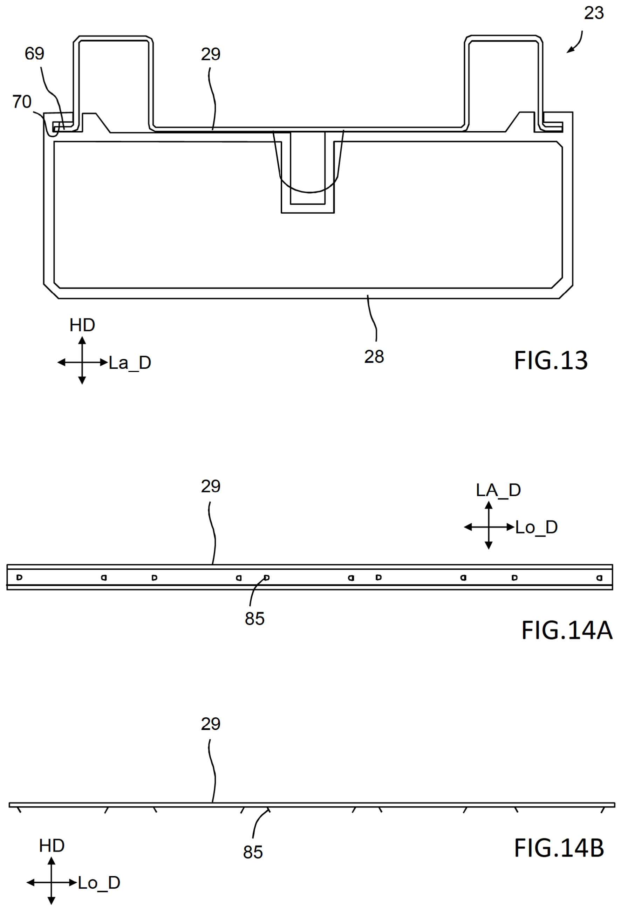

Figures 10-14B shows views of parts of the mounting structure 1 of figures 4-9, wherein figure 10 shows a side view of the first and second tension bar 24, 25, figure 11A shows a side view of the threaded member 52, figure 11B shows a side view of the first to fourth clamping element 5-8, figure 12 shows a perspective view of a distance member 35, figure 13 shows an end view of the elongated base structure 26 in the longitudinal direction Lo_D comprising an elongated metal rail structure 29 and a plurality of foot segments 28 attached thereto, and figure 14A-14B shows a top view and side view of said elongated metal rail structure 29.

With reference to figures 4-14B, the mounting structure 1 comprises an elongated base structure 23 extending in the longitudinal direction Lo_D and configured for being fastened to a support surface 4.

The elongated base structure 23 is substantially linear, i.e. a straight section, and it comprises a flat bottom surface for resting against the underlying support surface 4.

In the example embodiment of figures 4-14B, the elongated base structure comprises an elongated metal rail structure 29 connected to a plurality of foot segments 28 that are configured to be fastened to the support surface. The plurality of foot segments 28 are stationary mounted to the support surface 4, for example be screws or other type of fasteners, and the metal rail structure 29 is slightly moveably mounted relative to the plurality of foot segments 28 for enabling relative motion therebetween during thermal expansion/contraction of the metal rail structure 29.

In other words, the connection between the elongated metal rail structure and the plurality of foot segments 28 is configured to enable a relative motion between the elongated metal rail structure and the plurality of foot segments 28 in the longitudinal direction for enabling thermal deformation of metal rail while the plurality of foot segments 28 remains stationary, thereby avoiding risk for damages to the underlying support surface.

Each of the plurality of foot segments 28 has a relatively small length in the longitudinal direction Lo_D, such that thermal expansion of an individual foot segment 28 will not cause any damages to the underlying support surface due to thermal elongation/contraction.

The elongated metal rail structure 29 may be made of a single piece rail segment, or composed of a plurality of joined parts. The elongated metal rail structure 29 may for example have a cross-sectional U-shape in a plane extending perpendicular to the longitudinal direction Lo_D, as illustrated particularly well in figure 13. In such a scenario, the raised side walls of the U-shaped elongated metal rail structure serves for attachment of the first and third clamping elements 6,7, and/or for attachment of the first and second link arm structures 26, 27.

The metal rail structure 29 may be connected to the foot elements 28 via an elongated projection-groove connection. In the example embodiment of figure 13, the longitudinal side regions of the metal rail structure 28 are folded along a longitudinal line extending adjacent the longitudinal side edges, such that a narrow longitudinal end segment 69 of the metal rail structure 28 protrudes laterally outwards in both lateral directions, and each foot segment 28 may include a matching structure with two longitudinal recesses 70 configured to receive and hold said short laterally extending longitudinal segments of the metal rail structure 28 for securing the metal rail structure 29 to the plurality of foot segments 28.

The metal rail structure 29 may include a plurality of cut-out lugs 85 that engage with the axial sides of the foot elements 28 for holding the foot elements 28 in correct position in the longitudinal direction Lo_D of the base member 23.

The elongated base structure 23 extends in the longitudinal direction Lo_D and is configured for being fastened to a support surface 4.

The mounting structure 1 further comprises a first clamping element 5 attached to the elongated base structure at a first position 30 along the elongated base structure 23. In the described example embodiment of figures 4-14B the first clamping element 5 is pivotally attached to the elongated base structure 23. For example, the first clamping element 5 is pivotally attached to the elongated base structure 23 via a first pivot joint 36 having a pivot axis extending in lateral direction La_D of the elongated base structure 23.

However, in some example embodiments, the first clamping element 5 may instead be non-pivotally attached, e.g. fixedly attached to the elongated base structure 23 (not showed). Moreover, in the example embodiment of figures 1-16C the first clamping element 5 is directly attached to the metal rail structure 29, but in other example embodiments, the elongated base structure 23 may include some type of arm structure located at a first position 30 along the elongated base structure 23, wherein the first clamping element 5 is attached to said arm structure (not showed).

The mounting structure 1 further comprises a first link arm structure 26 pivotally connected to the elongated base structure 23. The pivotal connection is provided at a first end region 34 of the first link arm structure 26 and at a second position 31 along the elongated base structure 23.

The second position 31 is for example spaced apart from the first position 30 with a length approximately equal (+/- 25%) to the length between the first and second peripheral side surfaces 19, 20 of the solar panel 11, 12.

The first link arm structure 26 is pivotally connected to the elongated base structure via a second pivot joint 37 having a pivot axis extending in lateral direction La_D of the elongated base structure 23. Consequently, the first link arm structure 26 can be pivotally folded between a raised position and a folded down position.

The mounting structure 1 further comprises a second clamping element 6 attached to the first link arm structure 26, in particular at a second end region 73 of the first link arm structure 26, for enabling motion of the second clamping element 6 relative to the first clamping element 5, in particular circular motion of the second clamping element 6 around the second pivot joint 37.

In the example embodiment of figures 4-14B, the second clamping element 6 is pivotally attached to the first link arm structure 26.

Specifically, the second clamping element 6 is pivotally attached to the first link arm structure 26 at a third pivot joint 38 having a pivot axis extending in lateral direction La_D of the elongated base structure 23.

In some example embodiments, the second clamping element 6 may instead be non-pivotally attached, i.e. fixedly attached to first link arm structure 26 (not showed).

With reference to figures 1, 3 and 4-14B, the mounting structure is thus configured for mounting at least two solar panels, a first solar panel 11 and a second solar panel 12, on a support surface, wherein the mounting structure 1 is configured to hold the second solar panel 12 such that a facing direction of the second solar panel 12 is different compared with a facing direction of the first solar panel 11. The facing angle difference 77 between the facing directions of the first and second solar panel 11, 12 may for example be in the range of 10 - 135 degrees, specifically 10 - 90 degrees, as schematically indicated in figure 8.

For the purpose of holding the second solar panel 12, the elongated base structure 23 further comprises a third clamping element 7 attached to the elongated base structure 23 at a third position 32 along the elongated base structure 23, a second link arm structure 27 pivotally connected to the elongated base structure 23 at a fourth position 33 along the elongated base structure 23 spaced apart from the third position 32, a fourth clamping element 8 attached to the second link arm structure 27 at a second end region 75 of the second link arm structure 27 for enabling motion of the fourth clamping element 8 relative to the third clamping element 7, and an elongated second actuator arrangement 71 comprising a second elongated tension bar 25 operably connected to a second tensioning mechanism 72 for selectively varying the tension of the second elongated tension bar 25, wherein the second actuator arrangement 71 upon tensioning operation of the second tensioning mechanism 72 is configured for pulling the fourth clamping 8 element towards the third clamping element 7 for enabling a contracting clamping operation of a second solar panel 12 between the third and fourth clamping elements 7,8.

The second link arm structure 27 may be pivotally connected to the elongated base structure via a pivot joint 76 having a pivot axis extending in lateral direction La_D of the elongated base structure 23. Consequently, the second link arm structure 26 can be pivotally folded between a raised position and a folded down position.

As schematically illustrated in at least figures 4 and 5, the first and second link arm structures 26, 27 are folded down in opposite direction.

Moreover, with reference to figure 4, the first and third clamping elements 5, 7 are fastened to the elongated base structure 23 in first and second end regions of the elongated base structure 23, respectively, and wherein the first and second link arm structures 26, 27 are pivotally connected to a centre region of the elongated base structure 23, as seen in the longitudinal direction Lo_D of the mounting structure 1.

With reference to figures 4 - 14B, the first clamping element 5 comprises a clamping surface 39 configured to abut the first peripheral side surface 19 of the first solar panel 11, a first support surface 40 arranged substantially perpendicular to the clamping surface 39 and configured to abut the backside surface 18 of the first solar panel, and a second support surface 41 arranged substantially in parallel with, and spaced part from, the first support surface 40 and configured to abut the frontside surface 17 of the first solar panel 11.

The first clamping element 5 is thus configured to engage the first peripheral side surface 19 of the first solar panel 11 and the second clamping element 6 is configured to engage a second peripheral side surface 20 of the first solar panel 11, wherein the first peripheral side surface 19 is located on the opposite side to said second peripheral side surface 20.

The side walls of the first clamping element 5 that are configured to be in contact with the first solar panel 11 may thus have a generally U-shaped or J-shaped cross-sectional shape in a plane parallel to the longitudinal direction Lo_D and be configured to hold side edge of the first solar panel 11.

The first support surface 40 extends longer than the second support surface 41 in the longitudinal direction Lo_D because a relatively large first support surface 40 simplifies mounting of the first solar panel 11 in the mounting structure 1, namely by first placing the first solar panel 11 on the first support surface 40, and subsequently clamping the first solar panel 11.

The side wall 42 associated with the first support surface 40 is therefore longer than the side wall 43 associated with the second support surface 41.

In some example embodiments, such as illustrated in figures 4-14B, the first, second, third and fourth clamping elements 5,6 have substantially the same design. This simplifies manufacturing and logistics and reduces overall manufacturing and maintenance cost.

Consequently, in the example embodiment of figures 4-14B, the second clamping element 6 comprises a clamping surface 44 configured to abut the second peripheral side surface 20 of the first solar panel, a first support surface 45 arranged substantially perpendicular to the clamping surface 44 and configured to abut the backside surface 18 of the solar panel, and a second support surface 46 arranged substantially in parallel with, and spaced part from, the first support surface 45 and configured to abut the frontside surface 17 of the first solar panel 11.

The side walls of the second clamping element 5 that are configured to be in contact with the first solar panel 11 may have a generally U-shaped or J-shaped cross-sectional shape in a plane parallel to the longitudinal direction Lo_D and be configured to hold the side edge of the first solar panel 11 associated with the second peripheral side surface 20.

The first support surface 45 of the second clamping element 6 extends longer than the second support surface 46 in the longitudinal direction Lo_D because a relatively large first support surface 45 simplifies mounting of the first solar panel 11 in the mounting structure 1, namely by first placing the first solar panel 11 on the first support surface 45 and subsequently clamping the first solar panel 11.

The side wall 47 associated with the first support surface 45 is therefore longer than the side wall 48 associated with the second support surface 46.

The clamping surface 39, 44 of at least one of the first and second clamping elements 5, 6 comprises a needle pin 51 configured to abut against, and preferably also slightly protrude into, a metal surface on a peripheral side surface of the first solar panel 11 for providing an electrical ground connection between the first and/or second clamping elements 5, 6 and the mounting structure 1.

The mounting structure 1 further comprises an elongated first actuator arrangement 49 comprising a first elongated tension bar 24 operably connected to a first tensioning mechanism 50 for selectively varying the tension of the first elongated tension bar 24, wherein the first actuator arrangement upon tensioning operation of the first tensioning mechanism 50 is configured for pulling the second clamping element 6 towards the first clamping element 5 for enabling clamping of the first solar panel 11 between the first and second clamping element 5, 6.

A first end portion of the elongated first actuator arrangement 49 is connected to the first clamping element 5 or to the elongated base structure 23, and a second end portion of the elongated first actuator arrangement 49 is connected to the second clamping element 6 or to the first link arm structure 26.

In the example embodiment of figures 4-14B, the first end portion of the elongated first actuator arrangement 49 is connected to the first clamping element 5 and a second end portion of the elongated first actuator arrangement 49 is connected to the second clamping element 6.

Consequently, operation of the elongated first actuator arrangement 49 that results in contraction of the first actuator arrangement 49 inherently causes the second clamping element 6 to approach the first clamping element 5, and subsequently applying a clamping force on the first solar panel **11** when the first and second clamping elements have come in contact with the first and second peripheral side surfaces 19, 20, respectively.

The resulting clamping force of the first clamping element 5 is directed towards the second clamping element 6, and oppositely, thereby reliably fastening the first solar panel to the mounting structure 1, because the first and second clamping elements 5, 6 may provide a reliable, quick and easily accomplished positive form locking of each of the first and second clamping elements 5, 6 with the first solar panel 11. This is different from conventional clamp and fastening screw solutions, where the resulting clamping force is applied to the frontside surface 17 of the first solar panel **11** and towards the underlying retainer, i.e. perpendicular to the plane of the first solar panel 11. This convention solution is not only complicated and time-consuming to perform, but also less reliable because only the threads of the fastening member holds the first solar panel to the retainer.

The first and second support surfaces 40,41,44,46 of one or both of the first and second clamping elements 5, 6 may jointly define, at least partly, a small level of tapered form in a direction toward the clamping surface 39,44, i.e. a slightly narrowing form as seen from an entry of the clamping elements 5, 6, towards the bottom interior surface of said clamping elements 5, 6. This tapered form enables simple insertion of the solar panel into the first and second clamping element 5, 6 while also enabling provision of a secure, reliable and vibration-free clamping of the solar panel 11 to the mounting structure 1 in the clamped state of the mounting structure 1.

The first elongated tension bar 24 typically forms the main length, e.g. at least 75%, of a total length of the elongated first actuator arrangement 49, while the first tensioning mechanism 50 for enabling control of the tension of the first elongated tension bar 24 typically is relatively short and compact relative to the first elongated tension bar 24.

The first elongated tension bar 24 is connected to the first tensioning mechanism 50 for varying the tensile load of the first elongated tension bar 24 during clamping of the first solar panel 11.

The first elongated tension bar is for example made of metal material, specifically steel or aluminium. Moreover, the first elongated tension bar corresponds for example to a tension rod, or a tension wire, or a tension cable, or the like.

The first tensioning mechanism 50 is operably connected to the first elongated tension bar 24 for forming the first actuator arrangement 49.

The specific design of the first tensioning mechanism 50 and its operably connection to the first elongated tension bar 24 may have various designs, as long as it enables generation of a contacting clamping force between the first and second clamping elements 5, 6 by a user when operating the first tensioning mechanism 50.

For example, according to the example embodiment of figure 4-14B, the first tensioning mechanism 50 comprises a threaded member 52 that is threadingly engaged with a threaded section 53 of the first elongated tension bar 24 or with a threaded intermediate member (not showed) associated with the first elongated tension bar 24, e.g. a threaded intermediate member connected between the threaded member 52 and the first elongated tension bar 24.

The threaded section 53 may be located at a first end portion 63 of the first elongated tension bar.

As illustrated in figures 5, 7 and 11A, the threaded member 52 may be a bolt with internal threads that are threadingly engaged with external threads of said threaded section 53 of the first elongated tension bar 24.

Alternatively, the threaded member 52 may be a bolt with external threads that are threadingly engaged with internal threads of said threaded section 53 of the first elongated tension bar 24.

When the first tensioning mechanism 50 comprises a threaded member 52 that is threadingly engaged with a threaded section 53 of the first elongated tension bar 24, tensioning of the first tensioning mechanism 50 may be performed manually by a user, for example by operating a screw driver.

**In** other words, the tensioning operation of the first tensioning mechanism involves rotation of the threaded member.

**In** some example embodiments, the threaded member 52 may have an interface 62 for being operably connected to a manual tool or a driver bit of an electric screwdriver for enabling operation of the first tensioning mechanism 50.

For example, the threaded member 52 may have an interface 62 in form of a torx, internal or external hex drive, etc. for enabling torque transfer from the screwdriver to the threaded member.

Alternatively, the first tensioning mechanism 50 may comprises an eccentric clamp module (not showed) with an handle for manual operation of the eccentric clamp module. The eccentric clamp module may for example comprise one or more mutually connected link arms that form a toggle joint that provides a quick-acting clamping functionality Moreover, the eccentric clamp module may have a self-locking functionality in the tensioned state of the eccentric clamp module.

In other words, the tensioning operation of the first tensioning mechanism involves actuating the handle of the eccentric clamp module for manual operation of the eccentric clamp module, or actuating the handle of the toggle clamp module for manual operation of the toggle clamp module.

The eccentric clamp module may be spring loaded for ensuring a reliable clamping functionality also when taking into account manufacturing tolerance of the solar panel and with variations in assembly positioning, etc.

Alternatively, the first tensioning mechanism 50 may comprise a friction based clamping device configured for releasably engaging the first elongated tension bar 24, or an associated member thereto, after a certain clamping force between the first and second clamping elements 5, 6 has been obtained. In other words, a user may first apply a contracting clamping force between the first and second clamping elements 5, 6, for example manually or by a tool, and subsequently said friction based clamping device may be engaged on the first elongated tension bar 24 for locking the first elongated tension bar 24 in tensioned state.

Consequently the tensioning operation of the first tensioning mechanism involves releasably engaging the friction based clamping device on the first elongated tension bar, or a member associated thereto, after a certain clamping force between the first and second clamping elements has been obtained.

Still more alternatively, the threaded member corresponds to a wing nut for enabling manual operation of the first tensioning mechanism.

With reference to the example embodiment of figure 4-14B, specifically figures 5, 7 and 11B, a first end portion of the elongated first actuator arrangement 49 extends at least partly through an alignment guide arrangement 54 of the first clamping element 5 for controlling the angular position of the first clamping element 5 around the first pivot joint 36, in particular for ensuring that the first support surface 40 is always substantially parallel with straight line extending through a centre of each of the first and second clamping elements.

This is for example accomplished by providing an alignment guide arrangement 54 that is parallel with the first support surface 40 of the first clamping element 5.

In the example embodiment of figures 5, 7, 11B, the alignment guide arrangement 54 of the first clamping element 5 is a hole extending through a portion of the first clamping element 5, such as for example through the side wall 42 of the first support surface 40.

An alignment guide arrangement 54 of the first clamping element 5 in form of a hole extending through the side wall 42 of the first support surface 40 combined with positioning of the first pivot joint 36 immediately below the side wall 42 of the first support surface 40, e.g. with a shortest distance between a centre of first pivot joint 36 and the first support surface 40 being less than 45 mm, specifically less than 30 mm, results in relatively low bending torque on the first clamping element 5 during clamping of the first solar panel 11, thereby enabling less robust, heavy and costly design of the first clamping element while still ensuring a proper, reliable and correct engagement of the first clamping element 5 to the first solar panel 11.

By controlling that the first support surface 40 is substantially parallel with straight line extending through a centre of each of the first and second clamping elements 5,6, a more reliable and correct engagement of the first clamping element 5 to the first solar panel 11 is accomplished, thereby avoiding improper orientation of the first clamping element 5 that may result in failed engagement of the first clamping element 5 to the first solar panel 11.

Moreover, this control of angular position of the first clamping element 5 may ensure that the first support surface 40 is substantially parallel with a straight line extending through a centre of each of the first and second clamping elements 5,6 also when the first link arm structure 26 is located in folded down position, thereby ensuring a compact folded dimension of mounting structure during transport.

With reference to the example embodiment of figure 4-14B, specifically figures 5, 7 and 11, a second end portion of the elongated first actuator arrangement 49 extends at least partly through an alignment guide arrangement 55 of the second clamping element 6 for controlling the angular position of the second clamping element 6 around the third pivot joint 36, in particular for ensuring that the first support surface 45 of the second clamping element 6 is always substantially parallel with straight line extending through a centre of each of the first and second clamping elements 5, 6.

This is for example accomplished by providing an alignment guide arrangement 55 that is parallel with the first support surface 45 of the first clamping element 5.

In the example embodiment of figures 5, 7, 11B, the alignment guide arrangement 55 of the second clamping element 6 is a hole extending through a portion of the second clamping element 6, such as for example through the side wall 47 of the first support surface 45.

An alignment guide arrangement 55 of the second clamping element 6 in form of a hole extending through the side wall 47 of the first support surface 45 combined with positioning of the third pivot joint 38 immediately below the side wall 47 of the first support surface 45, e.g. with a shortest distance between a centre of third pivot joint 38 and the first support surface 45 being less than 45 mm, specifically less than 30 mm, result in relatively low bending torque on the second clamping element 6 during clamping of the first solar panel 11, thereby enabling less robust, heavy and costly design of the second clamping element while still ensuring a proper, reliable and correct engagement of the second clamping element 6 to the first solar panel 11.

By controlling that the first support surface 45 is substantially parallel with the straight line extending through a centre of each of the first and second clamping elements 5,6, a more reliable and correct engagement of the second clamping element 6 to the first solar panel 11 is accomplished, thereby avoiding improper orientation of the second clamping element 6 that may result in failed engagement of the second clamping element 6 to the first solar panel 11.

Moreover, this control of angular position of the second clamping element may ensure that the first support surface 45 is substantially parallel with the straight line extending through a centre of each of the first and second clamping elements 5,6 also when the first link arm structure 26 is located in folded down position, thereby ensuring a compact folded dimension of mounting structure during transport.

As illustrated with reference to the example embodiment of figures 4-14B, the first link arm structure 26 can be pivotally folded between a raised position, as showed in figures 1-3, 6-8 and a folded down position, as illustrated in figure 4-5. The folded down position of the first link arm structure results in a relatively flat configuration of the mounting structure 1, e.g. with a maximal size in the height direction HD of less than 250 mm, specifically less than 150 mm, and corresponds to a transport state of the mounting structure 1, wherein the raised position of the first link arm structure 26 results in a deployed configuration of the mounting structure 1 and corresponds to an assembled state of the mounting structure 1.

In the folded down position of the first link arm structure 26, the first link arm structure 26 may be substantially parallel with the longitudinal direction Lo_D of the elongated base structure 26.

Moreover, in the folded down position of the first link arm structure 26, also the first elongated tension bar may be substantially parallel with the longitudinal direction Lo_D of the elongated base structure 26.

In other words, an axis of elongation of the first link arm structure 26 and/or an axis of elongation of the first elongated tension bar 24 is substantially parallel, i.e. max +/- 10 degrees from parallel, with the longitudinal direction Lo_D of the elongated base structure 23 when the first link arm structure 26 is located in the folded down position.

When the first link arm structure 26 is located in the raised position, i.e. with first link arm structure 26 in the deployed state, an axis of elongation of the first link arm structure 26, an axis of elongation of the first elongated tension bar 24, and the longitudinal direction Lo_D of the elongated base structure 23 jointly form a triangle, as seen in the lateral direction La_D.

The triangle form may form an angle 56 in the range of 60-110 degrees, specifically in the range of 70-90 degrees, between the axis of elongation of the first link arm structure 26 and the longitudinal direction Lo_D of the elongated base structure 23.

In those example embodiments in which each of the first and second clamping elements 5, 6 are designed to clamp two neighbouring solar panels, as illustrated in figure 2, at least one of the first and second clamping elements 5, 6 further comprises a distance member 35 configured for keeping the first solar panel 11 and the neighbouring third solar panel 13 spaced apart from each other. In the example embodiment of figures 4-14B, the first clamping element 5 is provided with a distance member 35 while the second clamping member 6 is free from a distance member. However, this arrangement may be opposite, or by providing each of the first and second clamping elements 5, 6 with a distance member 35.

The distance member 35 is preferably attached to the first or second clamping element 5, 6, for example by a fastener or by welding or the like.

Alternatively, with reference to figures 5, 11B and 12, the distance member 35 may comprise a body 57 with a projection 58 and a through-hole 59 through the body 57. Thereby, the distance member 35 may be fastened to the first clamping element 5 by first installing the projection 58 into a matching recess 60 formed in a surface of the first clamping element 5, and subsequently locking the distance member 35 in this position by inserting the first tension bar 24 through the through-hole 59.

Consequently, the distance member 35 of the first and/or second clamping elements 5, 6 may have a through hole 59, and the elongated first actuator arrangement 49, specifically the first elongated tension bar 24, may be arranged to extend through said through-hole 59.

In such a scenario, the elongated first actuator arrangement would primarily be located between neighbouring solar panels 11, 13, i.e. in the void area between neighbouring solar panels 11, 13 defined by the distance member 35.

The projection 58 of the distance member 35 may also extend through a passage 89 provided in the matching recess 60 of the first clamping element 5 and then extend into a recess 61 of the threaded member 52, as illustrated in 5, 7 and 11A. Thereby, the threaded member 52 is axially locked relative to the first clamping element 5. Consequently, when the first link arm structure 26 pivots down from the raised position to the folded down position, the first actuator arrangement 49, in particular the first elongated tension bar 24, is configured to slide relative to the second clamping element 6. The same type of relative sliding motion, but in opposite direction, occurs when the first link arm structure 26 pivots upwards from the folded down position to the raised position. This is for example illustrated in figures 4 and 5, which shows that the first elongated tension bar 24 has slid relative to the second clamping element 6, such that a portion of the first elongated tension bar 24 extends beyond the second clamping element 6, in a direction away from the first clamping element 5.

It may be desirable to rotationally lock the first elongated tension bar 24, because this simplifies operation of the first tensioning mechanism 50 by rotation of the threaded member 52. Without a rotational locking of the first elongated tension bar 24 there is a risk that the first elongated tension bar 24 simply rotates when applying a rotational torque to the threaded member 52, thereby potentially blocking the possibility to adjust the first tensioning mechanism 50.

Consequently, for enabling said relative sliding motion between the first elongated tension bar 24 and the second clamping element 6 during folding of the first link arm structure 26 pivots between the folded down position and the raised position, while also providing a rotational locking of the first elongated tension bar 24, a second end portion 64 of the first elongated tension bar 24 may be provided with a folded edge 65 and a return portion 66 of the first elongated tension bar 24 extending backwards from the folded edge 65, wherein the return portion 66 is configured to interfere with the second clamping element 6 or the first link arm structure 26 for preventing the first elongated tension bar 24 from rotating when operating the first tensioning mechanism 50, in particular the first threaded member 52.

Specifically, the folded edge 65 and/or the return portion 66 are configured to engage a portion of the second clamping element 6 upon applying a rotational torque on the first elongated tension bar 24, thereby providing rotational form locking of the first elongated tension bar 24. In the example embodiment of figures 4-14B, the folded edge 65 and/or the return portion 66 are configured to engage a bottom surface of the second clamping element 6 upon applying a rotational torque on the first elongated tension bar 24, thereby providing rotational form locking of the first elongated tension bar 24.

The return portion 66 is preferably long enough to remain in interfering state with the second clamping element 6 or the first link arm structure 26 also in the folded state of the first link arm structure 26, as illustrated in figure 5.

In some example embodiments, the first elongated tension bar 24 has a circular cross-section. For example, the first elongated tension bar 24 may be made of a cylindrical rod that has been bent 180 degrees at second end portion 64 thereof to form the folded edge 65 and the return portion 66.

In some example embodiments, the first end portion 63 of the first elongated tension bar 24 extends at least partly through a hole 67, specifically a cylindrical hole, in a side wall 42 of the first support surface 40 of the first clamping element 5, wherein the second end portion 64 of the first elongated tension bar 24 extends through a hole 68, specifically a cylindrical hole, in a side wall 47 of the first support surface 45 of the second clamping element 6.

The rotational locking of the first elongated tension bar 24 relative to the second clamping element 6 may alternatively be provided by other design solutions, such as by using a first elongated tension bar 24 having a non-circular cross-section combined with a matching non-circular hole 68 in the second clamping element 6 or in the first link arm structure 26.

An elastic member 88 may be installed in the recess 60 of the first and/or second clamping elements 5,6 for improved engagement with the edge of the first solar panel 11. However, the elastic member 88 should not block the passage 89 down to the hole 67,68 of first and/or second clamping element 5,6.

The mounting structures 1 may be made of sheet metal, in particular sheet steel, for providing a strong and reliable mounting structure. However, the mounting structures 1 may alternatively be made of aluminium profiles or the like.

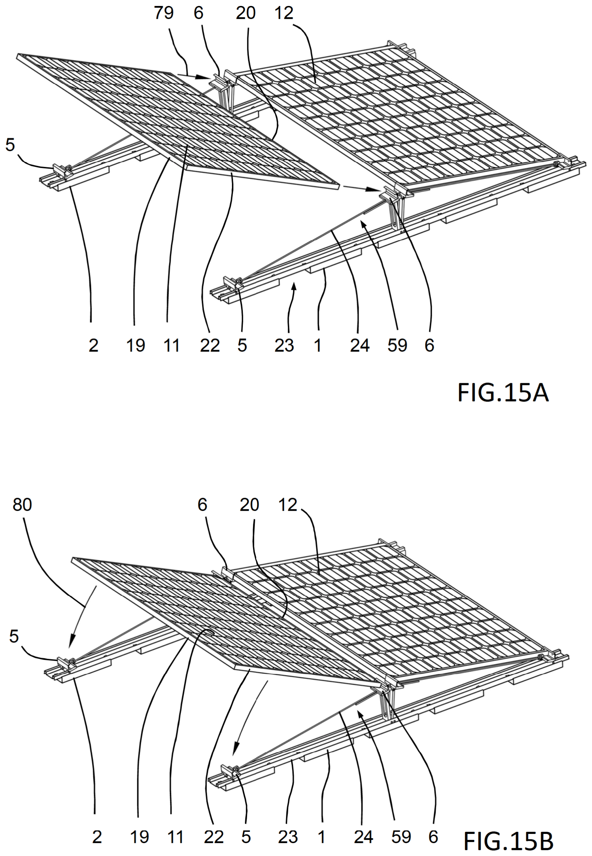

Figures 15A-15C schematically illustrates the basic steps for mounting the first solar panel 11 on the first and second mounting structures 1, 2. With respect to figures 15A and 15B, the method comprises a first step of positioning the first solar panel between the first and second clamping elements. This may for example be performed by first placing the second peripheral side surface 20 of the first solar panel 11 in the second clamping elements 6 by moving the first solar panel 11 along the direction of the first arrow 79 of figure 15A, and subsequently pivoting the first solar panel 11 downwards along the direction of the second arrow 80 of figure 15B for placing the first peripheral side surface 19 of the first solar panel 11 in the first clamping elements 5.

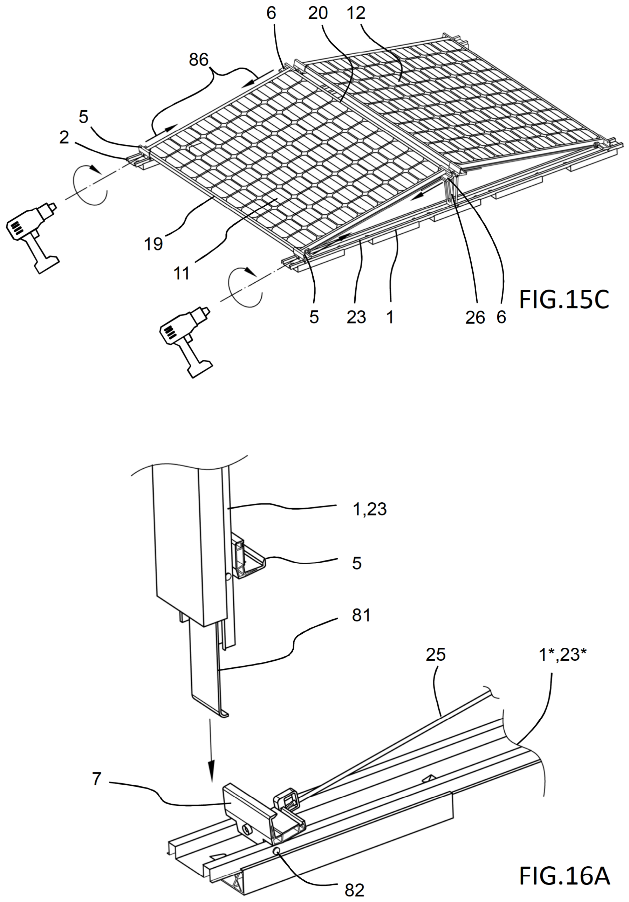

Thereafter, with reference to figure 15C, the method comprises a second step of operating the first tensioning mechanism 50 for tensioning the first tension bar 24 for pulling the second clamping element 6 towards the first clamping element 5, thereby clamping the first and second peripheral side surface 19,20 of the first solar panel 11 between the first and second clamping elements 5,6. Consequently, operation of the first tensioning mechanism 50 results in oppositely directed clamping force 86 exerted by the first and second clamping elements 5,6 on the first solar panel 11.

Insertion of the first solar panel into proper engagement with the first and second clamping elements 5,6 may be simplified by providing the side wall 43 associated with the second support surface 41 with an entry chamber 87 for guiding the first solar panel 11.

As indicated in figure 15C, the second step of operating the first tensioning mechanism 50 may be accomplished by applying a rotational torque to the first tensioning mechanism 50, e.g. the first threaded member 52, using a screw driver or the like, in particular an electrical screw driver.

The first step of positioning the first solar panel between the first and second clamping elements may alternatively involve a first step of placing the first peripheral side surface 19 of the first solar panel 11 in the first clamping elements 5, and subsequently pivoting the first solar panel 11 downwards for placing the second peripheral side surface 20 of the first solar panel 11 in the second clamping elements 6.

Still more alternatively, the first step of positioning the first solar panel between the first and second clamping elements may involve substantially simultaneously placing both the first and second peripheral side surfaces 19, 20 of the first solar panel **11 on** the first and second clamping elements 5, respectively.

A common feature of these alternatives ways for positioning of the first solar panel **11** between the first and second clamping elements 5,6 is the placement of the first solar panel between the first and second clamping elements 5,6 such that the backside surface 18 of the first solar panel **11** rests on the first support surface 40, 45 of the first and second clamping elements 5,6. This corresponds to a relatively stable and safe intermediate position of the first solar panel **11** that does not require active holding by the installation worker, and the installation worker may then instead focus on the task of performing the contractive clamping motion of the first and second clamping elements 5,6.

The method may additionally include an initial step of attaching the elongated base structure 23 of the first and second mounting structures 1, 2 to the support surface, for example by fasteners.

The method may also include a further initial step of preparing the first and second mounting structures 1,2, or ensuring that the first and second mounting structures 1,2 are prepared, for receiving the first solar panel 11. This may for example involve unfolding the first link arm structure 26 from the folded position to the raised position, i.e. deploying the first mounting structure 26, and/or controlling that the first actuator arrangement 49 is set in an operating state ready for receiving the first solar panel **11,** e.g. controlling the first tensioning mechanism 50 and position of the first and second clamping elements 5,6 for ensuring that they are placed in a position suitable for receiving the first solar panel 11.

The second step of operating the first tensioning mechanism 50 for tensioning the first tension bar 24 for pulling the second clamping element 6 towards the first clamping element 5 involves moving the second clamping element 6 towards the first clamping element 5 while the first clamping element 5 remains stationary. In other words, the second step involves moving the second clamping element 6 towards the first clamping element 5 such that the clamping surface 39 of the first clamping element abuts the first peripheral side surface 19 of the first solar panel **11** and the clamping surface 44 of the second clamping element 6 abuts the second peripheral side surface 20 of the first solar panel 11.

In some installation scenarios, it may be desired to connect a plurality of aligned individual first mounting structures 1 side by side and parallel with plurality of aligned individual second mounting structures 2, for forming a larger area of densely mounted solar panels. For this purpose, as illustrated in figure 16A, the elongated base structure 23 of a first mounting structures 1 may comprises a hook structure 81 at the first end region of the elongated base structure 23, wherein the hook structure 81 is configured to engage with the pivot joint 82 of the third clamping element 7, which is located at a second end region of elongated base structure 23* of an aligned neighbouring first mounting structures 1*, for mutually connecting two individual elongated base structures 23,23*.

Figures 16A-16C show the assembly steps of such a connection process. In figure 16A, the hook structure 81 is arranged in an extended state, i.e. protruding out from the elongated base structure 23 of the first mounting structure 1, and the first mounting structure 1 is arranged substantially perpendicular to the neighbouring first mounting structures 1*.

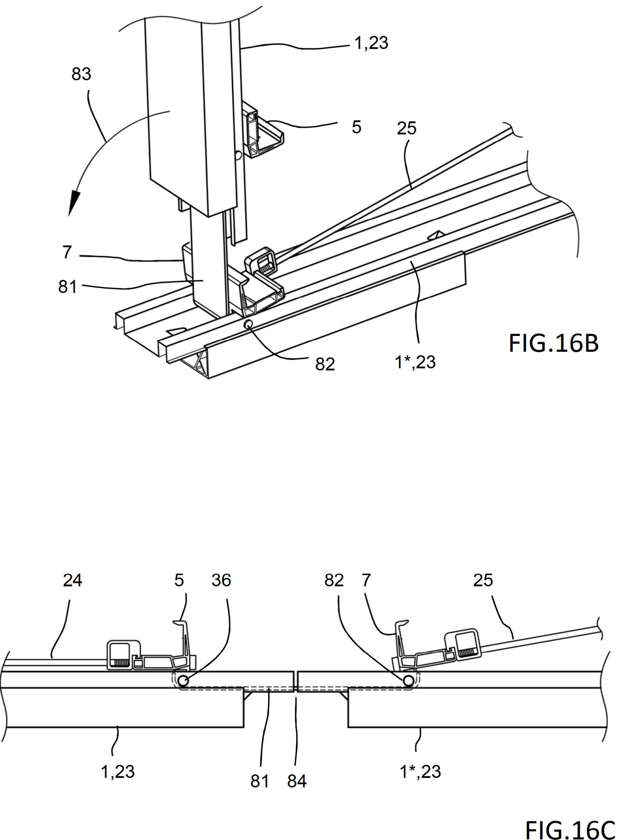

In a second step, the hook structure 81 is engaged with the pivot joint 82 of the third clamping element 7of the neighbouring first mounting structures 1*, and the first mounting structure 1 can be folded down, as illustrated by third arrow 83 in figure 16B, to form a flat and aligned assembly state of the first mounting structures 1 together with the neighbouring first mounting structures 1*, as illustrated in figure 16C.

In the flat and aligned assembly state showed in figure 16C, the hook structure 81 is engaged with both the first pivot joint 36 of the first clamping element 6 and with the pivot joint 82 of the third clamping element 7 of the neighbouring first mounting structures 1*, thereby keeping said first mounting structures 1,1* mutually connected in an aligned position.

In the flat and aligned assembly state showed in figure 16C, a gap 84 may be provided between the first mounting structures 1 and the neighbouring first mounting structure 1* for enabling thermal elongation of the elongated base structure 23 without casing interference.

In the event that the hook structure 81 is not needed for the installation, it may be stored in a non-extended state, i.e. attached to the elongated base structure 23 but not protruding out from the elongated base structure 23. In other words, the hook structure 81 may be installed and available on all mounting structures 1,2,3,1* and ready for deployment when required.

In the description of the mounting structure 1 provided herein, the portion of the mounting structure 1 adapted to hold the first solar panel 11 has been described more in detail. However, the portion of the mounting structure 1 adapted to hold the second solar panel 12 has identical design except facing in the other direction.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. For example, the mounting structure described herein may be provided in a reduced size, with the features associated with the second solar panel being removed from the mounting structure, i.e. a "half mounting structure" that is arranged for mounting solar panels facing only on one direction. Furthermore, modifications may be made to adapt a particular situation or material to the teachings of the present disclosure without departing from the essential scope thereof.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

1. First mounting structure
2. Second mounting structure
3. Third mounting structure
4. Support surface
5. First clamping element
6. Second clamping element
7. Third clamping element
8. Fourth clamping element
9. First side region
10. Second side region
11. (First) solar panel
12. Second solar panel
13. Third solar panel
14. Fourth solar panel
15. Fifth solar panel
16. Sixth solar panel
17. Frontside surface
18. Backside surface
19. First peripheral side surface
20. Second peripheral side surface
21. Third peripheral side surface
22. Fourth peripheral side surface
23. Elongated base structure
24. First tension bar
25. Second tension bar
26. First link arm structure
27. Second link arm structure
28. Foot segment
29. Metal rail structure
30. First position
31. Second position
32. Third position
33. Fourth position
34. First end region of first link arm structure
35. Distance member
36. First pivot joint
37. Second pivot joint
38. Third pivot joint
39. Clamping surface
40. First support surface
41. Second support surface
42. Side wall of first support surface
43. Side wall of second support surface
44. Clamping surface
45. First support surface
46. Second support surface
47. Side wall of first support surface
48. Side wall of second support surface
49. First actuator arrangement
50. First tensioning mechanism
51. Needle pin
52. First threaded member
53. Threaded section
54. Alignment guide arrangement of first clamping element
55. Alignment guide arrangement of second clamping element
56. Angle
57. Body
58. Projection
59. Through hole
60. Recess
61. Recess
62. Interface
63. First end portion of tension bar
64. Second end portion of tension bar
65. Folded edge
66. Return portion
67. Hole of first clamping element
68. Hole of second clamping element
69. End section of rail
70. Recess of foot
71. Second actuator arrangement
72. Second tensioning mechanism
73. Second end region of first link arm structure
74. First end region of second link arm structure
75. Second end region of second link arm structure
76. Pivot joint
77. Facing angle difference
78. Offset distance
79. First arrow
80. Second arrow
81. Hook structure
82. Pivot joint of third clamping element
83. Third arrow
84. Gap
85. Lug
86. Clamping force
87. Chamber
88. Elastic member
89. Passage
Lo_D: Longitudinal direction
La_D: Lateral direction
HD: Height direction

## Claims

1. A mounting structure (1) for mounting a first solar panel (11) on a support surface (4), the mounting structure (1) comprising:
an elongated base structure (23) extending in a longitudinal direction (Lo_D) and configured for being fastened to the support surface (4);
a first clamping element (5) attached to the elongated base structure (23);
a first link arm structure (26) pivotally connected to the elongated base structure (23);
a second clamping element (6) attached to the first link arm structure (26) for enabling motion of the second clamping element (6) relative to the first clamping element (5);
an elongated first actuator arrangement (49) comprising a first elongated tension bar (24) operably connected to a first tensioning mechanism (50) for selectively varying the tension of the first elongated tension bar (24), wherein the first actuator arrangement (49) upon operation of the first tensioning mechanism (50) is configured for pulling the second clamping element (6) towards the first clamping element (5) for enabling clamping of the first solar panel between the first and second clamping elements (5,6).

2. The mounting structure according to claim 1, wherein a first end portion of the elongated first actuator arrangement (49) is connected to the first clamping element (5) or to the elongated base structure (23), and/or wherein a second end portion of the elongated first actuator arrangement (49) is connected to the second clamping element (6) or the first link arm structure (26).

3. The mounting structure according to claim 2,
wherein the first end portion of the elongated first actuator arrangement (49) at least partly extends through an alignment guide arrangement (54) of the first clamping element (5) for controlling the angular position of the first clamping element (5) around a pivot joint (36) of the first clamping element (5); and/or
wherein the second end portion of the elongated first actuator arrangement (49) at least partly extends through an alignment guide arrangement (55) of the second clamping element (6) for controlling the angular position of the second clamping element (6) around a pivot joint (38) of the second clamping element (6).

4. The mounting structure according to any of the preceding claims, wherein the first clamping element (5) is pivotally attached to the elongated base structure (23), and/or wherein the second clamping element (6) is pivotally attached to the first link arm structure (26).

5. The mounting structure according to any of the preceding claims, wherein the first tensioning mechanism (50) comprises:
a first threaded member (52) engaged with a threaded section (53) of the first elongated tension bar (24) or with a threaded intermediate member associated with the first elongated tension bar (24); or
an eccentric clamp module with handle for manual operation of the eccentric clamp module; or
a toggle clamp module with handle for manual operation of the toggle clamp module; or
a friction based clamping device configured for releasably engaging the first elongated tension bar (24), or an associated member thereto, after a certain clamping force between the first and second clamping elements has been obtained.

6. The mounting structure according to any of the preceding claims, wherein the first link arm structure (26) can be pivotally folded between a raised position and a folded down position, wherein the folded down position of the first link arm structure (26) results in a flat configuration of the mounting structure (1) and corresponds to a transport state of the mounting structure (1), wherein the raised position of the first link arm structure (26) results in a deployed configuration of the mounting structure (1) and corresponds to an assembled state of the mounting structure (1).

7. The mounting structure according to any of the preceding claims, wherein the first actuator arrangement (49), in particular the first elongated tension bar (24), is configured to slide relative to the second clamping element (6) or the first link arm structure (26) upon folding of the first link arm structure (26) between a raised position and a folded down position.

8. The mounting structure according to any of the preceding claims, wherein a first end portion of the first elongated tension bar (24) at least partly extends through a hole (67) in the first clamping element (5); and/or wherein a second end portion of the first elongated tension bar (24) extends through a hole (68) in the second clamping element (6).

9. The mounting structure according to any of the preceding claims, wherein the first elongated tension bar (24) comprises a folded edge (65) and a return portion (66) extending backwards from the folded edge (65), wherein the return portion (66) is configured to interfere with the second clamping element (6) or the first link arm structure (26) for preventing the first elongated tension bar (24) from rotating when operating the first tensioning mechanism (50).

10. The mounting structure according to any of the preceding claims, wherein at least one of the first and second clamping elements (5,6) comprises a needle pin (51) configured to abut against a metal surface of the first solar panel (11) for providing an electrical ground connection between the mounting structure (1) and the first solar panel **(11).**

11. The mounting structure according to any of the preceding claims, wherein the elongated base structure (23) comprises an elongated metal rail structure (29) connected to a plurality of foot segments (28) that are configured to be fastened to the support surface (4).

12. The mounting structure according to any of the preceding claims, wherein at least one, specifically both, of the first and second clamping elements (5,6) further comprises a distance member (35) configured for keeping the first solar panel (11) and a neighbouring solar panel (13) spaced apart from each other.

13. The mounting structure according to any of the preceding claims, wherein the mounting structure (1) is configured for additionally mounting a second solar panel (12) on the support surface (1), wherein the mounting structure (1) is configured to hold the second solar panel (12) such that a facing direction of the second solar panel (12) is different compared with a facing direction of the first solar panel (11), wherein the elongated base structure (1) further comprises:
a third clamping element (7) attached to the elongated base structure (23);
a second link arm structure (27) pivotally connected to the elongated base structure (23);
a fourth clamping element (8) attached to the second link arm structure (27) for enabling motion of the fourth clamping element (8) relative to the third clamping element (7),
an elongated second actuator arrangement (71) comprising a second elongated tension bar (25) operably connected to a second tensioning mechanism (72) for selectively varying the tension of the second elongated tension bar (25), wherein the second actuator arrangement (71) upon operation of the second tensioning mechanism (72) is configured for pulling the fourth clamping element (8) towards the third clamping element (7) for enabling clamping of a second solar panel (12) between the third and fourth clamping elements (7,8).

14. The mounting structure according to any of the preceding claims, wherein the elongated base structure (23) comprises a hook structure (81) at a first end region of the elongated base structure (23), wherein the hook structure (81) is configured to engage with a pivot joint (82) at a second end region of a neighbouring elongated base structure (23*) located aligned with the elongated base structure (23), for connecting two individual elongated base structures (1,1*).

15. A method for mounting a first solar panel (11) on a support surface (4) by means of a mounting structure (1),
wherein the mounting structure (1) comprises an elongated base structure (23) extending in a longitudinal direction (Lo_D), a first clamping element (5) attached to the elongated base structure (23), a first link arm structure (26) pivotally connected to the elongated base structure (23), a second clamping element (6) attached to the first link arm structure (26) for enabling motion of the second clamping element (6) relative to the first clamping element (5), and an elongated first actuator arrangement (49) comprising a first elongated tension bar (24) operably connected to a first tensioning mechanism (50) for selectively varying the tension of the first elongated tension bar (24),
the method comprising:
positioning the first solar panel (11) between the first and second clamping elements (5,6);
operating the first tensioning mechanism (50) for tensioning the elongated first tension bar (24) for pulling the second clamping element (6) towards the first clamping element (5), thereby clamping the first solar panel (11) between the first and second clamping elements (5,6).
